# FASCICULE DE BREVET EUROPEEN

(11) **EP 0 397 705 B1**
(45) Date de publication et mention de la délivrance du brevet: **13.07.1994**
(21) Numéro de dépôt: 89901119.1
(22) Date de dépôt: 23.12.1988
(51) Int. Cl.: C08L 67/02

(54) **COMPOSITIONS THERMOPLASTIQUES A BASE DE POLYESTER SATURE ET ARTICLES MOULES LES CONTENANT**
THERMOPLASTISCHE ZUSAMMENSETZUNGEN AUF DER BASIS VON GESÄTTIGTEN POLYESTERN UND GEFORMTE GEGENSTÄNDE DARAUS
THERMOPLASTIC COMPOSITIONS BASED ON SATURATED POLYESTER AND MOULDED ARTICLES CONTAINING THEM

(30) Priorité: 23.12.1987 FR 8717995
(43) Date de publication de la demande: 22.11.1990
(73) Titulaire: ELF ATOCHEM S.A., 92800 Puteaux (FR)
(72) Inventeur: HERT, Marius, F-60550 Verneuil-en-Halatte (FR); BERTIN, Germain, F-62300 Lens (FR)
(74) Mandataire: Rochet, Michel
(86) Numéro de dépôt international: FR8800641
(87) Numéro de publication internationale: WO8905838

(56) Documents cités:
- EP-A- 0 206 267
- EP-A- 0 211 649
- EP-A- 0 285 256
- WO-A-85/03718
- FR-A- 2 580 656
- PATENT ABSTRACTS OF JAPAN, vol. 11, no. 60, (C-405)(2507) 24 février 1987 & JP A 61221260 (MITSUI PETROCHEM. INC. LTD ) 1er octobre 1987, voir le résumé
- PATENT ABSTRACTS OF JAPAN, vol. 11, no. 38, (C-401)(2485) 4 février 1987 & JP A 61204258 (mitsui petrochem. IND.) 10 septembre 1986, voir le résumé

## Description

La présente invention concerne des alliages de polyesters thermoplastiques utilisables notamment pour la production d'articles moulés renforcés au choc.

Le renforcement au choc des polyesters thermoplastiques tels que notamment le polyéthylène téréphtalate et le polybutène téréphtalate constitue une préoccupation permanente pour l'industrie de production d'articles en ces matières. Cette préoccupation concerne non seulement le renforcement au choc à température ambiante mais, de plus en plus, aussi le renforcement au choc aux très basses températures. En effet de tels articles moulés sont susceptibles d'être utilisés non seulement à des fins domestiques mais aussi, par exemple dans le cas des pièces d'automobile, en extérieur dans des pays froids.

Ainsi le brevet US-A-4.172.859 décrit notamment une composition thermoplastique multiphase tenace constituée essentiellement d'une phase contenant de 60 à 99% en poids d'une matrice polyester saturé et de 1 à 40 % en poids d'une autre phase contenant des particules d'un copolymère statistique ayant une taille de 0,01 à 3 microns, ledit copolymère statistique étant à base d'éthylène, d'un premier comonomère choisi parmi les anhydrides d'acides dicarboxyliques insaturés et les époxydes insaturés et d'un second comonomère choisi parmi les esters acryliques et vinyliques. Parmi les modes de réalisation de ce document qui mettent en jeu un copolymère statistique comprenant un époxyde insaturé, on peut noter une composition atteignant une résistance au choc Izod entaillé de 86 kg.cm/cm à 20°C (valeur mesurée à l' extrémité de l'éprouvette opposée au côté de l'injection), cette composition comprenant 20% d'un terpolymère contenant 67% en poids d'éthylène, 5 % en poids de méthacrylate de glycidyle et 28% en poids d'acétate de vinyle. Il convient toutefois de noter que la présence d'acétate de vinyle dans ce terpolymère constitue un inconvénient lors de la transformation de cette composition ; en effet il se produit, à la température usuelle de transformation en articles industriels, un dégagement d'acide acétique traduisant une dégradation du terpolymère.

D'autres documents montrent la possibilité d'améliorer la résistance au choc de polyesters thermoplastiques à basse température. Ainsi le brevet EP-A-072.455 décrit une composition comprenant 100 parties en poids de polybutylène téréphtalate, 10 parties en poids d'un copolymère comprenant 90 % en poids d'éthylène et 10 % en poids de méthacrylate de glycidyle, et 20 parties en poids d'un copolymère comprenant 85 % en moles d'éthylène et 15 % en moles de butène-1. Cette composition possède une résistance au choc. Izod entaillé de 19 Kg.cm/cm à - 40°C. La demande de brevet japonais publiée n° 86-204.258 décrit une composition comprenant 80 parties en poids de polybutylène téréphtalate, 10 parties en poids d'un copolymère constitué de 89 % en poids d'éthylène et 11 % en poids de métacrylate de glycidyle, 10 parties en poids d'un copolymère constitué de 91 % en moles d'éthylène et 9 % en moles de butène-1, et de 1 partie en poids d'anhydride maléïque. Cette composition possède une résistance au choc Izod entaillé de 19 kg.cm/cm à - 30°C.

La demande de brevet WO 85/03718 (DUPONT DE NEMOURS) décrit une composition comprenant de 60 à 97 % en poids de polyester et de 3 à 40 % en poids d'un terpolymère éthylène/acrylate d'alkyle/méthacrylate de glycidyle. Ainsi, une composition comprenant 90 parties en poids d'un polyéthylène térephtalate et 10 parties en poids d'un terpolymère constitué de 63,6 % en poids d'éthylène, 28 % en poids d'acrylate de butyle et 8,4 % en poids de méthacrylate de glycidyle a une résistance au choc Izod entaillé de 42,2 J/m (4,22 KJ/m²) à - 20°C.

Il convient de noter que les niveaux de performance à basse température atteints par les compositions de ces trois derniers documents, s'ils apportent déjà une amélioration substantielle aux performances à basse température des polyalkylène téréphtalates non modifiés, sont encore insuffisants pour de nombreuses applications. En outre, ces compositions montrent des performances à température ambiante nettement inférieures à celles décrites en premier lieu pour le brevet US-A-4,172,859. En conséquence un premier but de la présente invention consiste à mettre au point des compositions thermoplastiques à base de polyesters saturés possédant une excellente résistance au choc aussi bien à température ambiante qu'à très basse température. Un second but de la présente invention consiste à mettre au point des composition thermoplastiques à base de polyesters saturés ne présentant pas l'inconvénient d'une dégradation de l'un de ses composants dans les conditions de températures élevées auxquelles lesdites compositions sont soumises lors de leur transformation en articles industriels. Un troislème but de la présente invention consiste à mettre au point des compositions thermoplastiques à base de polyesters saturés qui, outre les avantages précédents, possèdent une viscosité adaptée à leur transformation par la technique d'injection, et plus particulièrement un indice de fluidité (déterminé à 250°C sous une charge de 5 kg) au moins égal à 10dg/min.

Un premier objet de la présente invention consiste en une composition thermoplastique comprenant au moins environ 60 % en poids d'un polyester saturé et au plus environ 40 % en poids d'au moins un renforçant polymère, caractérisée en ce que comme renforçant polymère on utilise une composition polymère au moins partiellement réticulée obtenue par mélange de :
(a) au moins un copolymère comprenant de 94 à 60 % environ en poids d'éthylène, de 5 à 25 % environ en poids d'au moins un acrylate ou méthacrylate d'alkyle ou cycloalkyle dont le groupe alkyle ou cycloalkyle possède de2 à 10 atomes de carbone, et de 1 à 15 % environ en poids d'au moins un epoxyde insaturé,
(b) au moins un copolymère comprenant de 84 à 60 % environ en poids d'éthylène.
   lène, de 15 à 34% environ d'au moins un acrylate ou méthacrylate d'alkyle ou cycloalkyle dont le groupe alkyle ou cycloalkyle possède de 2 à 10 atomes de carbone, et de 1 à 6 % environ en poids d'au moins un anhydride d'acide dicarboxylique insaturé, et
(c) au moins un composé capable d'accélérer la réaction entre la fonction époxy présente dans le copolymère (a) et la fonction anhydride présente dans le copolymère (b).

La combinaison, unique par rapport à l'enseignement de l'art antérieur rappelé ci-dessus, des composants (a), (b) et (c) dans le renforçant polymère permet d'atteindre de manière avantageuse les buts de la présente invention. En premier lieu il est important que le copolymère (a) renferme au moins approximativement les proportions spécifiées d'éthylène, d'acrylate et d'époxyde insaturé, ces proportions étant seules capables de procurer au renforçant polymère, à travers ce composant, l'adhérence nécessaire vis-à-vis de la matrice de polyester saturé. En second lieu la même remarque s'applique aux proportions d'éthylène, d'acrylate et d'anhydride insaturé dans le copolymère (b). En troisième lieu il est nécessaire que le composé (c) soit en quantité suffisante, vis-à-vis des copolymères (a) et (b), pour jouer efficacement son rôle de promoteur de la réticulation au moins partielle de la composition polymère. La détermination de la quantité efficace de composé (c) est à la portée de l'homme de l'art, une fois fixées les proportions d'époxyde dans le copolymère (a) et d'anhydride dans le copolymère (b). Enfin la présence simultanée des composants (a) et (b) est indispensable à l'efficacité de la présente invention, la présence du composant (a) seul ayant pour effet désavantageux de conférer à la composition un indice de fluidité trop faible, c'est-à-dire une viscosité inadaptée à la transformation par la technique d'injection.

Des exemples d'acrylate ou méthacrylate d'alkyle utilisables comme constituants des copolymères (a) et (b) sont notamment le méthacrylate de méthyle, l'acrylate d'éthyle, l'acrylate de n-butyle, l'acrylate d'isobutyle, l'acrylate de 2-éthylhexyle. Des exemples d'époxydes insaturés utilisables comme constituants du polymère (a) sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.

Des exemples d'anhydrides d'acide dicarboxylique insaturé utilisables comme constituants du polymère (b) sont notamment l'anhydride maléïque, l'anhydride itaconique, l'anhydride citraconique, l'anhydride tétrahydrophtalique.

Parmi les composés (c) capables d'accélérer la réaction entre la fonction époxy présente dans le copolymère (a) et la fonction anhydride présente dans le copolymère (b) on peut citer notamment :
- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylènediamine, la tétraméthylguanidine, la triéthylènediamine, la tétraméthylhydrazine, la N,N-diméthylpipérazine, la N,N,N',N'-tétraméthyl-1,6-hexanediamine.
- des phosphines tertiaires telles que la triphénylphosphine.

Le copolymère (a) entrant dans la composition du polymère renforçant selon l'invention peut avoir un indice de fluidité (déterminé à 190°C sous 2,16 kg selon norme ASTM D 1238) choisi dans une gamme allant de 1 à 50 dg/min., de préférence 5 à 20 dg/min. Le copolymère (b) entrant dans la composition du polymère renforçant selon l'invention peut avoir un indice de fluidité (déterminé comme ci-dessus) choisi dans une gamme allant de 1 à 50 dg/min.

Les proportions respectives des copolymères (a) + (b) dans le polymère renforçant peuvent être telles que le rapport en poids (a)/(b) soit compris entre 0,1 et 10 environ. Ces proportions pourront notamment être choisies par l'homme de l'art en fonction des teneurs respectives en anhydride du copolymère (b) et en époxyde insaturé du copolymère (a) ; de préférence ces proportions sont choisies de telle sorte que le rapport entre les fonctions anhydrides présentes dans le copolymère (b) et les fonctions époxydes présentes dans le copolymère (a) soit à peu près équimoléculaire.

Le polyester saturé entrant dans la composition thermoplastique selon l'invention peut être choisi parmi les produits de condensation saturés linéaires de glycols et d'acides dicarboxyliques, ou de leurs dérivés réactifs. De préférence, ces résines comprendront des produits de condensation d'acides dicarboxyliques aromatiques ayant de 8 à 14 atomes de carbone et d'au moins un glycol de la formule HO(CH₂)ₙOH dans laquelle n est un nombre entier de 2 à 10. Les polyesters préférés sont le poly-1,4-butylène téréphtalate et le polyéthylène téréphtalate.

Les compositions selon l'invention peuvent être modifiées par un ou plusieurs additifs classiques tels que des stabilisants et des inhibiteurs de dégradation par oxydation, thermique ou par l'ultraviolet ; des lubrifiants et des agents de démoulage, des matières colorantes comprenant les colorants et les pigments, des charges et renforcements fibreux et en particules, des agents de nucléation, des retardateurs d'inflammation, etc.

Les stabilisants peuvent être incorporés dans la composition à un stade quelconque de la préparation de la composition thermoplastique. De préférence, les stabilisants sont inclus assez tôt pour empêcher un début de dégradation avant que la composition puisse être protégée. Ces stabilisants doivent être compatibles avec la composition.

Des agents stabilisant la viscosité tels que des polycarbodiimides peuvent être utilisés.

Les agents de stabilisation à l'oxydation et à la chaleur utiles dans les matières de la présente invention comprennent ceux utilisés dans les polymères d'addition d'une manière générale. Ils comprennent, par exemple, des phénols stériquement encombrés, des hydroquinones, des amines secondaires, et leurs combinaisons.

Les agents de stabilisation à l'ultraviolet, par exemple dans une proportion allant jusqu'à 2 %, par rapport au poids du polyester saturé, peuvent aussi être ceux utilisés dans les polymères d'addition en général. Comme exemples, on peut mentionner divers résorcinols substitués, salicylates, benzotriazoles, benzophénones, etc.

Des lubrifiants et agents de démoulage utilisables, par exemple dans des proportions allant jusqu'à 1 % par rapport au poids de la composition, sont l'acide stéarique, l'alcool stéarique, les stéréamides ; des colorants organiques comme la nigrosine, etc. ; des pigments, par exemple le bioxyde de titane, le sulfure de cadmium, le sulfoséléniure de cadmium, les phtalocyanines, le bleu d'outremer, le noir de carbone, etc.; sont également utilisables, jusqu'à 50 % par rapport au poids de la composition, des charges et renforcements fibreux ou en particules, par exemple des fibres de carbone, des fibres de verre, de la silice amorphe, de l'amiante, du silicate de calcium ou d'aluminium, du carbonate de magnésium, du kaolin, de la craie, du quartz pulvérisé, du mica, du feldspath, etc.; des agents nucléants, par exemple du talc, du fluorure de calcium, de l'alumine et du polytétrafluoroéthylène finement divisé, etc. Des retardateurs d'inflammation comprenant de 1 à 10 % en poids d'oxydes de métaux plurivalents comme le fer, l'étain, l'antimoine, le zinc, le cuivre, le magnésium et le plomb, en combinaison avec de 3 à 20 % en poids de composés aromatiques et cycloaliphatiques halogénés comme l'hexabromobenzène, l' oxyde de décabromobiphényle, le carbonate d'hexabromodiphényle, des dérivés de bisphénol A halogéné comme le diacétate de tétrabromobisphénol A, etc.

Les matières colorantes (colorants et pigments) peuvent être présentes dans des proportions allant jusqu'à environ 5 % en poids, par rapport au poids de la composition.

Les compositions selon l'invention peuvent être préparées en mélangeant à l'état fondu, dans un système clos, le polyester saturé et le renforçant polymère en un mélange uniforme dans une boudineuse à vis multiples telle qu'une boudineuse Werner Pfeiderer ayant généralement de 2 à 5 blocs de malaxage et au moins un pas inverse pour produire un cisaillement intense, ou d'autres dispositifs classiques de plastification comme les malaxeurs Brabender, Banbury, Buss, etc.

Parmi les compositions thermoplastiques selon l'invention, celles qui présentent une résistance au choc Izod entaillé au moins égale à 110 kg.cm/cm à 20°C et/ou au moins égale à 25 kg.cm/cm à -30°C et/ou au moins égale à 20 kg.cm/cm à -40°C sont plus particulièrement préférées.

La présente invention permet de fabriquer des articles industriels moulés par injection possédant une excellente résistance au choc aussi bien à température modérée qu'à très basse température tels que par exemple des absorbeurs de choc et autres pièces pour l'industrie automobile.

Les exemples suivants sont donnés à titre simplement illustratif de la présente invention.

### EXEMPLE 1 (comparatif)

On considère une composition constituée de 80 parties en poids d' un poly-1,4-butylène téréphtalate d'indice de fluidité (déterminé à 250°C sous 5 kg) égal à 79,3 dg/min., commercialisé sous l'appellation ULTRADUR® B 4550, et de 20 parties en poids d'un terpolymère d'indice de fluidité (déterminé à 190°C sous 2,16 kg) égal à 11 dg/min., constitué de 79 % en poids d'éthylène, 9 % en poids d'acrylate d'éthyle et 12 % en poids de méthacrylate de glycidyle. Cette composition a été préparée sur un co-malaxeur BUSS PR 46 à la température de 240°C.

La composition résultante, possèdant un indice de fluidité (déterminée à 250°C sous 5 kg) égal à 1,7 dg/min., est mal adaptée à une transformation par la technique d'injection.

Cette composition présente une résistance au choc Charpy avec entaille, déterminée selon la norme DIN 53453, comme suit :
34 kJ/m² à 20°C
19 kJ/m² à 0°C
12 kJ/m² à -20°C

### EXEMPLE 2

On prépare, dans les conditions de l'exemple 1, une composition comprenant :
- 80 parties en poids du polyester ULTRADUR® B 4550,
- 5 parties en poids du terpolymère utilisé à l'exemple 1,
- 15 parties en poids d'un terpolymère d'indice de fluidité (déterminé à 190°C sous 2,16 kg) égal à 5 dg/min., commercialisé sous l'appellation LOTADER® 3700 et comprenant 68 % en poids d'éthylène, 30 % en poids d'acrylate d'éthyle et 2 % en poids d'anhydride maléique, et
- 1,2 partie en poids de diméthylstéarylamine.

Cette composition présente un indice de fluidité (déterminé à 250°C sous 5 kg) de 29,7 dg/min. qui la rend tout à fait acceptable pour une transformation par la technique d'injection.

Cette composition présente en outre :
- une résistance au choc Charpy avec entaille, déterminée selon la norme DIN 53453, comme suit :
   45 kJ/m² à 20°C
   39 kJ/m² à 0°C
   15 kJ/m² à -20°C
- une résistance au choc Izod entaillé, déterminée selon la norme ASTM D 256, comme suit :
   135 kg.cm/cm à 20°C
   35 kg.cm/cm à -30°C
   26 kg.cm/cm à -40°C

### EXEMPLES 3 et 4 (comparatifs)

On considère des compositions constituées de 80 parties en poids d'un polyéthylène téréphtalate (comprenant une proportion mineure de poly-1,4-butylène téréphtalate) commercialisé sous l'appellation ARNITE® AO 4900 et de 20 parties en poids d'un terpolymère d'éthylène.

Le terpolymère utilisé à l'exemple 3 est celui de l'exemple 1.

Le terpolymère utilisé à l'exemple 4 est le LOTADER® 3700 décrit à l'exemple 2.

Ces compositions, préparées sur un co-malaxeur BUSS PR 46 à la température de 265°C, présentent des résistances au choc Charpy avec entaille (exprimées en kJ/m² et déterminées selon la norme DIN 53453) comme indiqué au tableau ci-après en fonction de la température de mesure.

### EXEMPLE 5

On prépare, dans les conditions de l'exemple 3, une composition constituée de :
- 80 parties en poids du polyester ARNITE® AO 4900,
- 5 parties en poids du terpolymère de l'exemple 1,
- 15 parties en poids de terpolymère LOTADER® 3700, et
- 0,4 parties en poids de diméthylstéarylamine.

Cette composition présente une résistance au choc Charpy avec entaille, déterminée selon la norme DIN 53453, comme indiqué au tableau ci-après en fonction de la température de mesure.

### EXEMPLE 6

On prépare, dans les conditions de l'exemple 3, une composition constituée de :
- 75 parties en poids du polyester ARNITE® AO 4900,
- 12,5 parties en poids du terpolymère de l'exemple 1,
- 12,5 parties en poids du terpolymère LOTADER® 3700, et
- 0,3 partie en poids de diméthylstéarylamine.

Cette composition présente une résistance au choc Charpy avec entaille, déterminée selon la norme DIN 53453, comme indiqué au tableau ci-après en fonction de la température de mesure.

**TABLEAU**

| Exemple | 20°C | 0°C | -20°C | -40°C |
|---|---|---|---|---|
| 3 | 30 | 13 | 8,0 | 5,7 |
| 4 | 6 | 4 | 3,7 | 3,6 |
| 5 | 46 | 23 | 9,2 | 7,6 |
| 6 | 40 | 33 | 11,8 | 8,4 |

## Revendications

1. Composition thermoplastique comprenant au moins 60 % en poids d'un polyester saturé et au plus 40% en poids d'au moins un renforçant polymère, caractérisée en ce que comme renforçant polymère on utilise une composition polymère au moins partiellement réticulée obtenue par mélange de :
(a) au moins un copolymère comprenant de 94 à 60 % en poids d'éthylène, de 5 à 25 % en poids d'au moins un acrylate ou méthacrylate d'alkyle ou cycloalkyle dont le groupe alkyle ou cycloalkyle possède de 2 à 10 atomes de carbone, et de 1 à 15 % en poids d'au moins un époxyde insaturé,
(b) au moins un copolymère comprenant de 84 à 60 % eu poids d'éthylène, de 15 à 34% d'au moins un acrylate ou méthacrylate d'alkyle ou cycloalkyle dont le groupe alkyle cu cycloalkyle possède de 2 à 10 atomes de carbone, et de 1 à 6 % en poids d'au moins un anhydride d'acide dicarboxylique insaturé, et
(c) au moins un composé capable d'accélérer la réaction entre la fonction époxy présente dans le copolymère (a) et la fonction anhydride présente dans le copolymère (b); et que le rapport en poids du copolymère (a) au copoloymère (b) est comprisentre 0,1 et 10.

2. Composition thermoplastique selon la revendication 1, caractérisée en ce que l'époxyde insaturé entrant dans la composition due copolymère (a) est le méthacrylate de glycidyle.

3. Composition thermoplastique selon l'une des revendications 1 et 2 caractérisée en ce que l'anhydride d'acide dicarboxylique insaturé entrant dans la composition du copolymère (b) est l'anhydride maléïque.

4. Composition thermoplastique selon l'une des revendications 1 à 3, caractérisée en ce que le composé (c) est une amine tertiaire.

5. Composition thermoplastique selon l'une des revendications 1 à 4, caractérisée en ce que le polyester saturé est choisi parmi le polyéthylène téréphtalate et le poly-1,4-butylène téréphtalate.

6. Composition thermoplastique selon l' une des revendications 1 à 5, caractérisée en ce qu'elle présente une résistance au choc Izod entaillé au moins égale à 110 kg.cm/cm à 20°C et/ou au moins égale à 25 kg.cm/cm à -30°C et/ou au moins égale à 10 kg.cm/cm à -40°C.

7. Articles moulés obtenus à partir d'une composition thermoplastique selon l'une des revendications 1 à 6.

## Claims

1. Thermoplastic composition comprising at least 60 % by weight of a saturated polyester and not more than 40 % by weight of at least one reinforcing polymer, characterized in that the reinforcing polymer employed is an at least partly crosslinked polymer composition obtained by mixing:
(a) at least one copolymer comprising from 94 to 60 % by weight of ethylene, from 5 to 25 % by weight of at least one alkyl or cycloalkyl acrylate or methacrylate in which the alkyl or cycloalkyl group has from 2 to 10 carbon atoms, and from 1 to 15 % by weight of at least one unsaturated epoxide,
(b) at least one copolymer comprising from 84 to 60 % by weight of ethylene, from 15 to 34 % of at least one alkyl or cycloalkyl acrylate or methacrylate in which the alkyl or cycloalkyl group has from 2 to 10 carbon atoms, and from 1 to 6 % by weight of at least one anhydride of an unsaturated dicarboxylic acid, and
(c) at least one compound capable of accelerating the reaction between the epoxy functional group present in the copolymer (a) and the anhydride functional group present in the copolymer (b), and in that the weight ratio of the copolymer (a) to the copolymer (b) is between 0.1 and 10.

2. Thermoplastic composition according to Claim 1, characterized in that the unsaturated epoxide forming part of the composition of the copolymer (a) is glycidyl methacrylate.

3. Thermoplastic composition according to either of Claims 1 and 2, characterized in that the anhydride of an unsaturated dicarboxylic acid forming part of the composition of the copolymer (b) is maleic anhydride.

4. Thermoplastic composition according to one of Claims 1 to 3, characterized in that the compound (c) is a tertiary amine.

5. Thermoplastic composition according to one of Claims 1 to 4, characterized in that the saturated polyester is chosen from polyethylene terephthalate and poly-1,4-butylene terephthalate.

6. Thermoplastic composition according to one of Claims 1 to 5, characterized in that it has a notched Izod impact strength of at least 110 kg cm/cm at 20°C and/or at least 25 kg cm/cm at -30°C and/or at least 20 kg cm/cm at -40°C.

7. Moulded articles obtained from a thermoplastic composition according to one of Claims 1 to 6.

## Patentansprüche

1. Thermoplastische Zusammensetzung, die mindestens 60 Gew.% eines gesättigten Polyesters und höchstens 40 Gew.% mindestens eines Verstärkungspolymers enthält, dadurch gekennzeichnet, daß man als Verstärkungspolymer eine zumindest teilweise vernetzte Polymerzusammensetzung verwendet, erhalten durch Mischung von:
(a) mindestens einem Copolymeren, enthaltend 94 bis 60 Gew.% Ethylen, 5 bis 25 Gew.% mindestens eines Alkyl- oder Cycloalkylacrylats oder -methacrylats, dessen Alkyl- oder Cycloalkylgruppen 2 bis 10 Kohlenstoffatome haben, und 1 bis 15 Gew.% mindestens eines ungesättigten Epoxyds,
(b) mindestens einem Copolymeren, enthaltend 84 bis 60 Gew.% Ethylen, 15 bis 34 Gew.% mindestens eines Alkyl- oder Cycloalkylacrylats oder -methacrylats, dessen Alkyl- oder Cycloalkylgruppen 2 bis 10 Kohlenstoffatome haben, und 1 bis 6 Gew.% mindestens eines ungesättigten Dicarboxylsäureanhydrids, und
(c) mindestens einer Verbindung, die es ermöglicht, die Reaktion zwischen der Epoxyfunktion des Copolymers (a) und der Anhydridfunktion des Copolymers (b) zu beschleunigen;
und daß das Gewichtsverhältnis von Copolymer (a) zu Copolymer (b) zwischen 0,1 und 10 liegt.

2. Thermoplastische Zusammensetzung nach Anspruch 1, dadurch gekennzeichnet, daß das in die Zusammensetzung des Copolymeren (a) eingebrachte ungesättigte Epoxyd Glycidylmethacrylat ist.

3. Thermpolastische Zusammensetzung nach einem der Ansprüche 1 und 2, dadurch gekennzeichnet, daß das in die Zusammensetzung des Copolymeren (b) eingebrachte ungesättigte Dicarboxylsäureanhydrid Maleinsäureanhydrid ist.

4. Thermpolastische Zusammensetzung nach einem der Ansprüche 1 bis 3, dadurch gekennzeichnet, daß die Verbindung (c) ein tertiäres Amin ist.

5. Thermpolastische Zusammensetzung nach einem der Ansprüche 1 bis 4, dadurch gekennzeichnet, daß der gesättigte Polyester aus der Gruppe von Polyethylenterephtalat und Poly-1,4-butylenterephtalat ausgewählt ist.

6. Thermpolastische Zusammensetzung nach einem der Ansprüche 1 bis 4, dadurch gekennzeichnet, daß sie eine Schlagzähigkeit nach der Izod-Kerb-Methode von mindestens 110 kg·cm/cm bei 20°C und/oder mindestens 25 kg·cm/cm bei -30°C und/oder mindestens 20 kg·cm/cm bei -40°C besitzt.

7. Formteil, erhalten aus einer thermoplastischen Zusammensetzung nach einem der Ansprüche 1 bis 6.
